# EUROPEAN PATENT SPECIFICATION

(11) **EP 0 506 158 B1**
(45) Date of publication and mention of the grant of the patent: **17.04.1996**
(21) Application number: 92200574.9
(22) Date of filing: 27.02.1992
(51) Int. Cl.: A01F 25/20, F15B 11/22

(54) **Device for taking out and distributing ensilage material**
Vorrichtung zum Entnehmen und Verteilen von Silage
Appareil pour enlever et distribuer de l'ensilage

(30) Priority: 01.03.1991 NL 9100384
(43) Date of publication of application: 30.09.1992
(60) Divisional application: 94200687.5
(73) Proprietor: Trioliet Mullos B.V., NL-7581 HE Losser (NL)
(72) Inventor: van der Plas, Nicolaas, NL-7576 WB Oldenzaal (NL)
(74) Representative: Louet Feisser, Arnold

(56) References cited:
- EP-A- 0 106 713
- EP-A- 0 359 482
- DE-A- 2 920 346
- DE-A- 2 935 388
- DE-A- 3 128 561
- DE-A- 3 411 248
- DE-A- 3 837 509
- DE-A- 3 938 499
- DE-B- 2 810 366
- FR-A- 2 320 884
- FR-A- 2 501 130
- FR-A- 2 553 619
- NL-A- 8 101 964
- MACHINE DESIGN 2 May 1957, CLEVELAND US pages 94 - 97 STEWART & MORITZ 'Synchronising Motions with Hydraulic Cylinders'

## Description

The invention relates to a device for taking out, transporting and handling ensilage material, which device comprises a box-like container having an open side, a separating member for separating ensilage material in portions out of a silo, which separating member is pivotable about a first axis connected by an arm to a flap-like member having two side walls, which flap-like member is pivotable about a substantially horizontal second axis substantially parallel to the open side and near the bottom of the container, the first and second axis being parallel.

Such device is disclosed in DE-A-2 920 346. The flap-like member and its side walls are a portion of the container and are able to pivot downwardly. In its downward position the lower edge of the flap-like member is located near the ground. Ensilage material put on the flap-like member is further transported by a conveyer moving over the said flap-like member.

With such a device portions of ensilage material intended for animal feed are cut away one at a time from a silage heap, whereafter the portion is carried into the box-like container in order to take it to the place where the animals must be fed. During or after transport the ensilage material is mixed in order to make it suitable for dispensing to the animals.

The invention has for its object to improve the device such that the cut away portions of cattle feed can be carried into the box-like container more rapidly and without loss whereby additional manual labour can be avoided.

The device according to the invention is characterized in that the separating member is carried by two arms, each of which being pivotable connected to a side wall of the flap-like member and that the flap-like member can pivot as to tilt the said portions ensilage material into the container. Therefore, after the separating member has cut the ensilage material and it is deposited on the flap-like member, the flap-like member can pivot as to tilt the ensilage material into the container, whereby the separating member follows the pivoting movement of the flap-like member.

Further features of the invention are set forth in the claims.

The invention is further elucidated in the figure description hereinbelow of a number of embodiments. In the drawing:
fig. 1 shows a perspective view of a first embodiment of the device according to the invention wherein the box-like container is provided with roller supports, a vertically movable separating member and a flap-like member arranged on the open side,
fig. 2a and b show in each case a side view of the device of fig. 1 shown in two operating positions,
fig. 3 is a perspective view, partly with broken away portions, of a seond embodiment of the device according to the invention,
fig. 4a and b show in each case an upright side view of the device of fig. 3 in two different operating positions,
fig. 5 and 6 each show a side view corresponding with fig. 4 of a variant of the device of fig. 3.

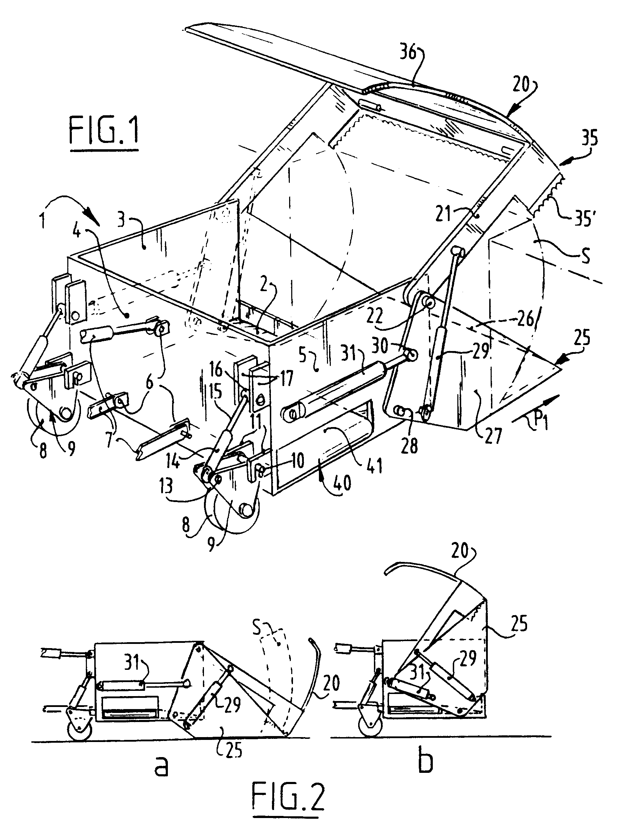

Designated in fig. 1 with the numeral 1 is the box-like container which consists of a bottom 2, three standing side walls 3, 4 and 5, wherein the fourth standing wall is left open.

The front wall 4 in fig. 1 is provided with a three-point coupling 6 for coupling of a three-point suspension to for instance an agricultural tractor (not shown). This can also be replaced by other coupling means.

The front wall 4 is moreover provided here with two support rollers each close to the standing edge of the wall, which support rollers 8 are received in a tiltable bogie 9 which is connected pivotally at 10 in lugs 11 of wall 4, wherein at a distance from the pivot point 10 is arranged a second pivot point 13 onto which engages the end of a cylinder 14. The piston rod 15 is coupled to a pivot pin 16 which is mounted rotatably in two plates 17. Within the scope of the invention one support roller can also be arranged either pivotally or non-pivotally.

Situated on the open rear side is a separating member 20 whereof the operation is further elucidated hereinbelow. The separating member serves to separate portions out of a heap of ensilage material S, see the broken contour line.

In the embodiment shown in fig. 1 the separating member 20 is provided with two pivot arms 21 which are mounted pivotally about a pivot pin 22.

Further arranged at the open rear side of the box-like container 1 is a flap-like pick-up means 25 comprising here a bottom plate 26 and a wall 27 parallel to the walls 3 and 5 of the box-like container 1. The bottom plate 26 and standing walls 27 form a U opening to the top, wherein this pickup means is pivotally connected at the pivot pin 28 to the side wall 3, 5 of box-like container 1. The bottom plate can also be a bottom in the form of tines.

It is noted that the pivot pin 22 is fixed to the standing wall 27 of the pick-up means, wherein between the pivot arm 21 and side wall 27 a pressure cylinder 29 is also received which supports on one side on the side wall 27 and on the other on the pivot arm 21.

Arranged between the pivot points 22 and 28 is a third pivot point 29 to which the free end of the piston rod 30 of a cylinder 31 is coupled. The cylinder 31 supports at 32 on the side wall 3 and 5 of the box-like container 1.

The above mentioned separating member 20 is provided with a U-shaped cutting side 35, the breadth of which corresponds with that of the box-like container 1. The legs of the U 35' are oriented towards the open side of box-like container 1. On the side remote from the cutting side 35 the separating member 20 is embodied with a curved plate 36 whereof the radius of curvature varies from that of the pivot arms 21, this such that it becomes smaller towards the free end so that at this point the plate 36 is more sharply curved, see also fig. 2.

Finally, it is noted that on or in the bottom 2 of box-like container 1 is arranged a conveyor belt 40, the active upper part 41 of which is driven in the direction of a discharge opening 42, the driving of which is not further described since this is deemed generally known.

The above described device operates as follows. The operation is elucidated with reference to inter alia fig. 2.

In the position of fig. 1, wherein the separating member 20 is raised and the flap-like pick-up member 25 has dropped downward, by moving the device forward in the direction of arrow P1, see fig. 1, by means of the three-point suspension 7 of the tractor (not shown), the bottom wall 26 of the flap-like pick-up member can be pushed beneath the ensilage material S. This sliding under can take place easily because the silage pressure on the ground is small due to the curvature of the cutting, whereby the height of the material is decreased. Herein a portion of the side wall 27 of this flap-like pick-up means also penetrates into the ensilage material.

By energizing the cylinders 29 the separating member 20 can subsequently be brought downward, wherein the U-shaped cutting edge 35 penetrates through the ensilage material until the position in fig. 2a is reached. Here the long side of the U-shaped cutting edge will fall together with the free end edge of bottom plate 26. A slice-like portion of the ensilage material S is separated herewith from the silo, wherein the curved plate 36 ensures that the top side of the slice-like portion is tilted in the direction of the open box-like container 1. This action is further improved by the sharply curved free edge of the plate 36.

The cylinder 31 is then energized such that the pivot point 30 is moved in the direction of pivot point 32, carrying with it the closed system formed by the separating member 20 and the pick-up means 25. This actuation of cylinder 31 can be continued until the position of fig. 2b is reached. The ensilage material situated on the bottom plate 26 will herein be pushed into the box-like container 1, wherein the open side of box-like container 1 is simultaneously closed by the flap.

By subsequently using the tractor to transport the box-like container 1 in the direction opposed to that of arrow P1 the container 1 can be taken to the feed location for the animals, wherein the contents of box-like container 1 can be discharged by energizing conveyor belt 40 which carries the ensilage material sideways out of container 1 via opening 42.

It is noted that support rollers 8 only need be used in the position as shown in fig. 1, wherein the device, namely the bottom plate 26, is inserted into the ensilage material S. By adjusting the cylinders 14 the height of the support rollers 8 is determined relative to the bottom 2 of the box-like container 1, which assists the correct angle of penetration of bottom plate 26 into the ensilage material, see also fig. 2a, wherein the bottom plate 26 lies flat on the floor of the silo. The supporting of box-like container 1 by means of the rollers 8 is favourable with respect to the reaction forces which are transferred via the three-point suspension 7 onto the tractor, whereby there is less danger of it tilting on its rear wheels. As soon as the box-like container 1 is filled and transported to the feed location the whole device can be lifted by means of the three-point suspension 7 so that the support rollers 8 come clear of the ground.

In order to carry the U-shaped cutting edge 35 as uniformly as possible through the ensilage material S without the arms 21 going out of synchronized alignment as a consequence of an uneven load of the cylinders 29, a balancing or synchronizing system is arranged to avoid the said loss of synchronized alignment.

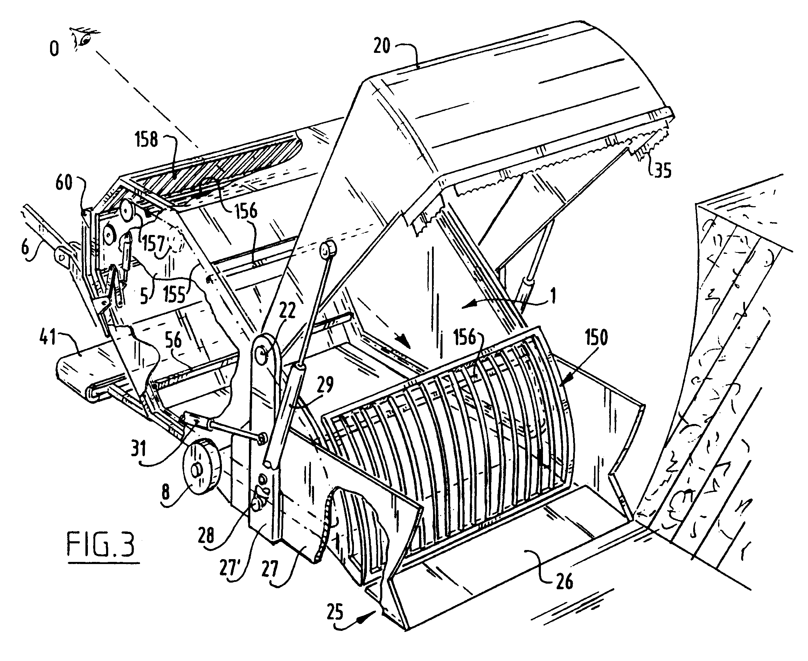

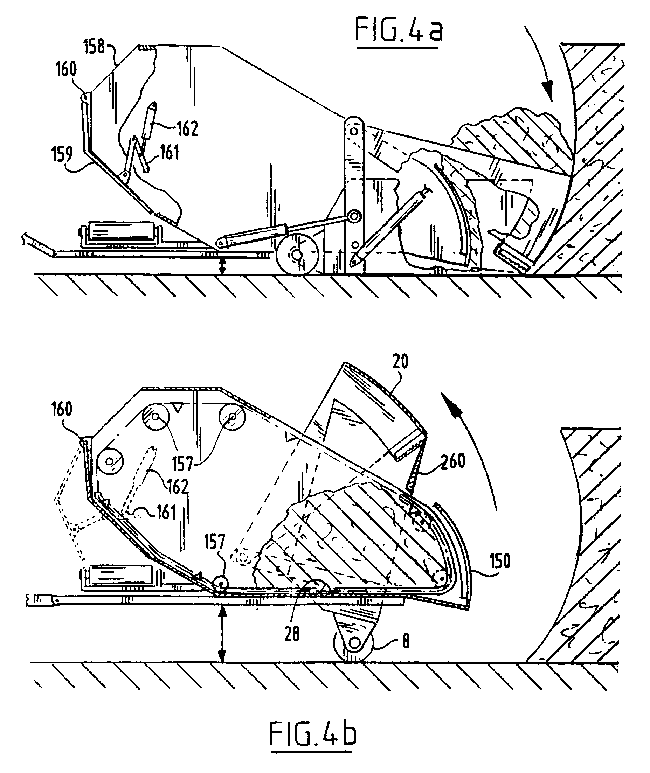

There now follows a description of a second embodiment of the device according to the invention as shown in fig. 3 and 4. The same reference numerals are used for the same components.

This embodiment also has a box-like container 1 open at the top which is provided at the front with means 6 for coupling to the three-point suspension of for instance a tractor. The separating member 20, which corresponds functionally with that described in fig. 1, is arranged on the rear part of the box-like container 1. The separating member can turn round a pivot pin 22 which is fixed onto a standing arm 27' forming a fixed part of the standing wall 27 of the flap-like pick-up means 25.

This flap-like pick-up means 25 is mounted pivotally about the pivot pin 28 on the standing side wall 5 of box-like container 1. Movement of the flap-like pick-up means 25 about the pivot pin 28 takes place by means of cylinder 31. The separating member 20 is controlled by a cylinder 29 arranged between this separating member 20 and the flap-like pick-up means 25.

The separating member 20 is also embodied in this embodiment with a cutting side which serves to cut through the ensilage material.

A discharge conveyor 41 is further arranged under the bottom of the open box-like container 1, the operation of which is further elucidated below.

As distinct from the above described embodiment the open box-like container 1 is provided on the rear side with a curved rear wall 150 embodied as a grid. The radius of curvature of the rear wall 150 corresponds with that of the path of the leading edge of the flap 26 of the pick-up means so that in all positions of the pick-up means 25 this leading edge fits closely onto the outside of rear wall 150.

The advantage of the grid-like rear wall 150 is that when the flap 26 is lifted with the cut away ensilage material lying thereon the ensilage material is carried over the top edge of rear wall 150 before it falls into the box-like container 1, see fig. 4a and b. No obstructions will thereby occur when multiple charges of ensilage material are discharged one after another into the open box-like container 1 because the mixing member arranged in the box 1 has removed the ensilage material from this rear part towards the front.

Another difference with the above described embodiments is that the mixing means in fig. 3 are embodied as two endless chains 155 between which are arranged carrier rods 156. These latter lie at a mutual distance such that sufficient space remains therebetween to easily enable feed therethrough of the ensilage material in the position according to fig. 4b. The chains 155 are trained about reversing wheels 157 placed close to the corner points of the box-like container 1 as seen in side view. The chains and therefore the carrier rods 156 thereby run closely along the bottom, front and top wall as well as the rear wall thereof. The ensilage material is thereby mixed continuously in the box 1 after the chain has been set into rotation by driving one of the reversing rollers 157.

It is noted here that the upper reversing rollers 157 are arranged at a distance from the front and top wall respectively of box 1 so that the path of the chain is removed from the relevant wall. Jamming of the ensilage material is hereby prevented.

Yet another difference from the above described embodiments is the fitting of the support wheel 8 to the box-like container 1. This support wheel 8 is no longer directly coupled to box-like container 1 but to the pick-up member 25, this forward of the pivot point 28, see fig. 3. When the pick-up member 25 tilts about the pivot pin 28 through actuation of cylinder 31 the wheel 8 will therefore also begin to turn on the pivot point 28 downwards from a position adjacent to the side wall of box-like container 1 to the position as shown in fig. 4b. This provides the advantage that when the ensilage material is cut from the heap the portion picked up by the plate 26 is easily torn loose from the silage heap due to the lifting of the whole device.

The transporting position is also reached automatically herewith because in the position according to fig. 4b the device can be driven by the tractor to the desired location.

By sufficiently tilting the pick-up member counter-clockwise the support wheel 8 passes over the dead point relative to the vertical through the pivot axis 28, which has a self-locking effect during transport of the device, see fig. 4b.

A following distinguishing feature compared with the above described device is that the sloping top wall 158 of box-like container 1 likewise takes a trellis-like form so that the driver of the tractor, whose eye O is shown schematically in fig. 3, has a good view of what is happening during taking out of the ensilage material since he can also look through the trellis-like, bent rear wall 150.

Finally, the rising bottom of container 1 is embodied as a flap, which bottom is designated with 159 and is pivotable about a pivot pin 160. Arranged between a point located at a distance from the pivot pin 160 and a fixed point on the side wall of box-like container 1 is an angle lever 161 which can be folded or straightened by a control cylinder 162. By energizing cylinder 162 the bent plate forming the rising bottom of box 1 can be swivelled outward round pivot pin 160 whereby access to the discharge conveyor 51 becomes possible. As can be seen in fig. 4 the discharge conveyor 151 is arranged beneath the bottom of the box 1 rising upward towards the front so that when flap 159 is opened the ensilage material situated in the box 1 falls onto the upper part of the discharge conveyor 41. By actuating the discharge conveyor 41 in the one or other rotational sense the ensilage material can be deposited both to the left or right of the device.

Supply of the ensilage material from the box-like container 1 takes place by energizing the motor for driving the chains 155 and therewith the carrier rods 156, whereby emptying of the box 1 can take place. Should it be necessary to stop temporarily during emptying, the flap 159 can be reclosed by energizing cylinder 162. Jamming of the ensilage material between the flap 159 and the carrier rods 156 is effectively prevented by the diverging path of movement of the rods 156 relative to the inner wall of the fixed part of the box 1 and that of the flap 159.

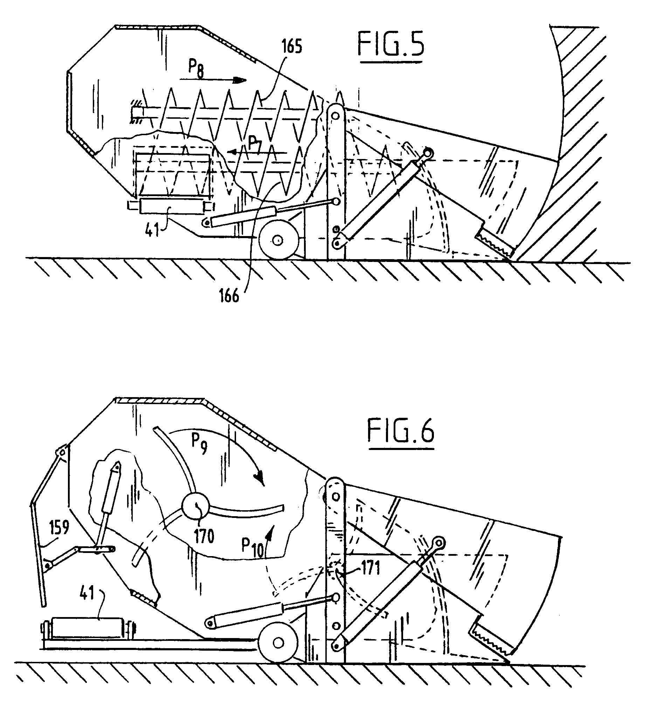

Shown respectively in fig. 5 and 6 are two embodiments which are a variant of that according to fig. 3.

In these embodiments the mixing means take a different form. Instead of the chains 155 two screw conveyors 165 are arranged extending in lengthwise direction of box 1 which provide opposing transporting directions during rotation. The lower screw conveyor 166 transports the ensilage material in the direction of arrow P7, while the upper conveyor carries the ensilage material in the direction of the arrow P8. An efficient mixing of the ensilage material is hereby effected in the box-like container 1.

Fig. 6 shows an embodiment wherein a number of radially extending arms are situated round transverse shafts 170, 171 present in the box, which arms are rotated in the direction of the arrows P9 and P10. The length of the arms 170, which can take a rake-like form, is such that the ensilage material can be carried from the one to the other mixer. Discharge of the ensilage material can take place in a manner corresponding with that of fig. 3 by opening the bottom flap 159.

It is remarked that the discharge conveyor 41 is situated here in the box-like container 1, as in fig. 1, but can likewise be placed in the position according to fig. 3 and 6 respectively.

The invention is not limited to the above described embodiments.

## Claims

1. Device for taking out, transporting and handling ensilage material, which device comprises a box-like container (1) having an open side, a separating member (20) for separating ensilage material in portions out of a silo, which separating member (20) is pivotable about a first axis connected by an arm (21) to a flap-like member (26) having two side walls (27), which flap-like member (26) is pivotable about a substantially horizontal second axis substantially parallel to the open side and near the bottom (2) of the container (1), the first and second axis being parallel, **characterized in that** the separating member (20) is carried by two arms (21), each of which being pivotable connected to a side wall (27) of the flap-like member (26) and that the flap-like member (26) can pivot as to tilt the said portions ensilage material into the container (1).

2. Device as claimed in claim 1, **characterized in that** between each arm (21) and the flap-like member (26) a hydraulic operating cylinder (29) is provided to cause a relative movement between the separating member (20) and the flap-like member (26).

3. Device as claimed in any of the preceding claims, whereby the device is provided with supporting wheels (8), **characterized in that** wheels (8) are connected to the flap-like member (26), so that the wheels (8) are moved downward with respect to the container (1) when the flap-like member (26) is turned to a substantial upright position.

## Patentansprüche

1. Vorrichtung zum Entnehmen, Transportieren und Verarbeiten von Silagematerial, wobei die Vorrichtung einen kastenartigen Behälter (1) mit einer offenen Seite und ein Trennelement (20) umfaßt, das Silagematerial in Portionen aus einem Silo heraustrennt, wobei das Trennelement (20) um eine erste Achse geschwenkt werden kann, die über einen Arm (21) mit einem klappenartigen Element (26) mit zwei Seitenwänden (27) verbunden ist, wobei das klappenartige Element (26) um eine im wesentlichen horizontale zweite Achse geschwenkt werden kann, die im wesentlichen parallel zu der offenen Seite und in der Nähe des Bodens (2) des Behälters (1) ist, wobei die erste und die zweite Achse parallel zueinander sind, **dadurch gekennzeichnet**, daß das Trennelement (20) von zwei Armen (21) getragen wird, die jeweils schwenkbar an einer Seitenwand (27) des klappenartigen Elementes (26) angebracht sind, und daß das klappenartige Element (26) so geschwenkt werden kann, daß es die Silagematerialportionen in den Behälter (1) kippt.

2. Vorrichtung nach Anspruch 1, **dadurch gekennzeichnet**, daß zwischen jedem Arm (21) und dem klappenartigen Element (26) ein hydraulischer Betätigungszylinder (29) vorhanden ist, der eine Bewegung des Trennelementes (20) und des klappenartigen Elementes (26) zueinander bewirkt.

3. Vorrichtung nach einem der vorangehenden Ansprüche, wobei die Vorrichtung mit Stützrädern (8) versehen ist, **dadurch gekennzeichnet**, daß die Räder (8) mit dem klappenartigen Element (26) verbunden sind, so daß die Räder in bezug auf den Behälter (1) nach unten bewegt werden, wenn das klappenartige Element (26) in eine im wesentlichen aufrechtstehende Position gedreht wird.

## Revendications

1. Dispositif pour enlever, transporter et manipuler une masse ensilée, ledit dispositif comprenant un conteneur en forme de boîte (1), comprenant un côte ouvert, un élément séparateur (20) pour séparer la masse ensilée par charges d'un silo, ledit élément séparateur (20) pouvant pivoter autour d'un premier axe relié par un bras (20) à un élément en forme de volet (26) muni de deux parois latérales (27), ledit élément en forme de volet (26) pouvant pivoter autour d'un second axe sensiblement horizontal, sensiblement parallèle au côté ouvert et près du fond (2) du conteneur (1), le premier et le second axes étant parallèles, caractérisé en ce que l'élément séparateur (20) est supporté par deux bras (21), chacun d'eux étant relié de façon pivotante à une paroi latérale (27) de l'élément en forme de volet (26) et en ce que l'élément en forme de volet (26) peut pivoter de manière à basculer lesdites portions de matière d'ensilage dans le conteneur (1).

2. Dispositif selon la revendication 1, caractérisé en ce qu'entre chaque bras (21) et l'élément en forme de volet (26) il est prévu un vérin à commande hydraulique (29) d'actionnement pour provoquer un déplacement relatif entre l'élément séparateur (20) et l'élément en forme de volet (26).

3. Dispositif selon l'une quelconque des précédentes revendications, dans lequel le dispositif est pourvu de roues de support (8), caractérisé en ce que les roues (8) sont accouplées à l'élément en forme de volet (26), de manière que les roues (8) soient déplacées vers le bas par rapport au conteneur (1) lorsque l'élément en forme de volet (26) pivote dans une position sensiblement verticale.
